# FASCICULE DE BREVET EUROPEEN

(11) **EP 0 822 358 B1**
(45) Date de publication et mention de la délivrance du brevet: **09.04.2003**
(21) Numéro de dépôt: 97401644.6
(22) Date de dépôt: 09.07.1997
(51) Int. Cl.: F16K 1/226

(54) **Robinet à papillon centré de très grande durée de vie**
Zentrische Absperrklappe mit langer Lebensdauer
Long life centric butterfly valve

(30) Priorité: 31.07.1996 FR 9609653; 31.07.1996 FR 9609654
(43) Date de publication de la demande: 04.02.1998
(73) Titulaire: KSB S.A.S, 92230 Gennevilliers (FR)
(72) Inventeur: Garrigues, Jean-claude, 33140 Cadaujac (FR)
(74) Mandataire: Eidelsberg, Victor Albert

(56) Documents cités:
- EP-A- 0 023 133
- DE-A- 2 925 237
- DE-A- 3 607 736
- DE-A- 4 213 521
- US-A- 3 940 108
- US-A- 4 634 097

## Description

La présente invention se rapporte aux robinets à papillon centré.

Dans un robinet à papillon centré, les arbres de pivotement du papillon dans le corps du robinet s'étendent dans le plan médian de symétrie du papillon. Cela assure, à la différence d'un robinet à papillon décalé, un comportement d'écoulement symétrique quelque soit le sens de l'écoulement.

L'invention vise un robinet de ce genre qui a une très grande durée de vie et qui est très facile à maintenir, en permettant des opérations de maintenance préventives, in situ, sans dépose du robinet en peu de temps.

Un robinet du genre suivant l'invention est décrit au DE-A-3 607 736.

L'invention est définie à la revendication 1.

Grâce au fait que le siège est en un matériau dur et rigide, par exemple en polyéthylène à très haut poids moléculaire, en polyacétal ou en métal, on évite la déformation locale au contact du siège et du papillon ce qui donne au robinet une capacité à résister à un très grand nombre de cycles. Afin de retrouver une capacité de déformation élastique nécessaire pour créer une pression de contact et donc une étanchéité entre le papillon et le siège, celui-ci a une forme annulaire capable de s'allonger sous l'effet du "forçage" lors de la fermeture. Cette capacité à s'agrandir est rendue possible par la présence d'un jeu radial, mais aussi axial, entre le siège et le corps. La présence des surfaces sphériques permet de réduire la pression spécifique de contact, ce qui contribue aussi à la longévité du robinet.

Au DE-A-42 13 521, la manchette 2 est en élastomère et les jeux 5 et 5' absorbent la déformation volumique de la manchette 2 lorsque la tranche de l'obturateur 6 pénètre dans l'élastomère et l'écrase. L'élastomère est ainsi bloqué, ce qui procure un effet positif pour la tenue sous pression et pour l'étanchéité du robinet. Cet effet de blocage n'est pas du tout recherché par la présente invention, car il s'opposerait à l'effet recherché, c'est-à-dire la liberté de modification de la géométrie de la manchette rigide.

Aux dessins annexés, donné uniquement à titre d'exemple :

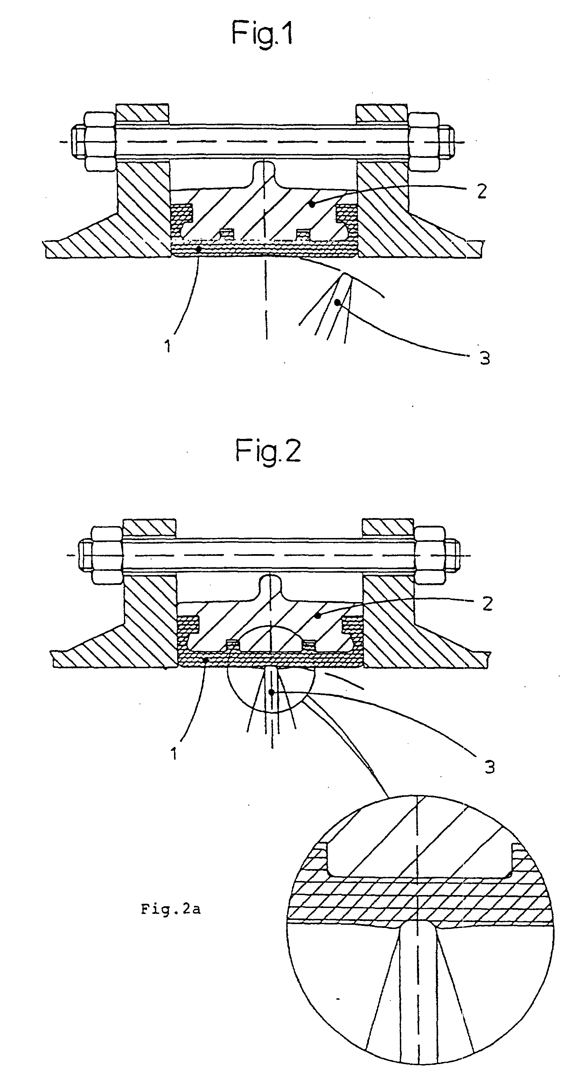

les figures 1, 2 et 2A illustrent l'état antérieur de la technique, la figure 1 présentant le robinet en position entrouverte et les figures 2 et 2A en position fermée. Aux figures 2 et 2A, la tranche du papillon 3 déforme l'élastomère dont est constitué le siège 1 et y pénètre. Le siège 1 est nécessairement en appui sur le corps 2 afin de créer la pression de contact sur la tranche du papillon 3 nécessaire à l'étanchéité.
la figure 3 est une vue semblable à celle de la figure 1 d'un robinet suivant l'invention qui est entrouvert.
les figures 4 et 4A montrent le robinet, suivant l'invention, fermé avec le déplacement radial du siège.

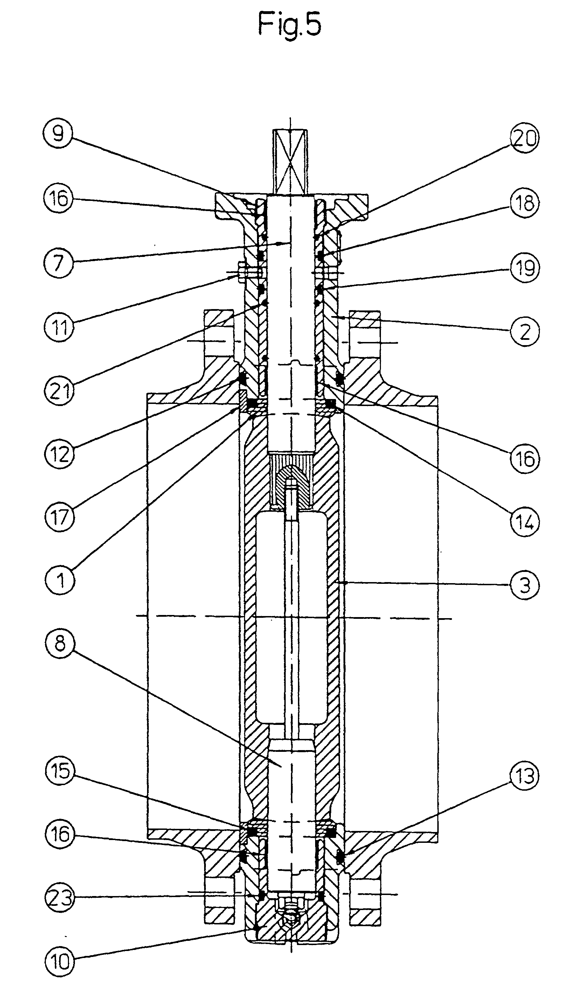

la figure 5 est une vue en coupe générale d'un robinet suivant l'invention.

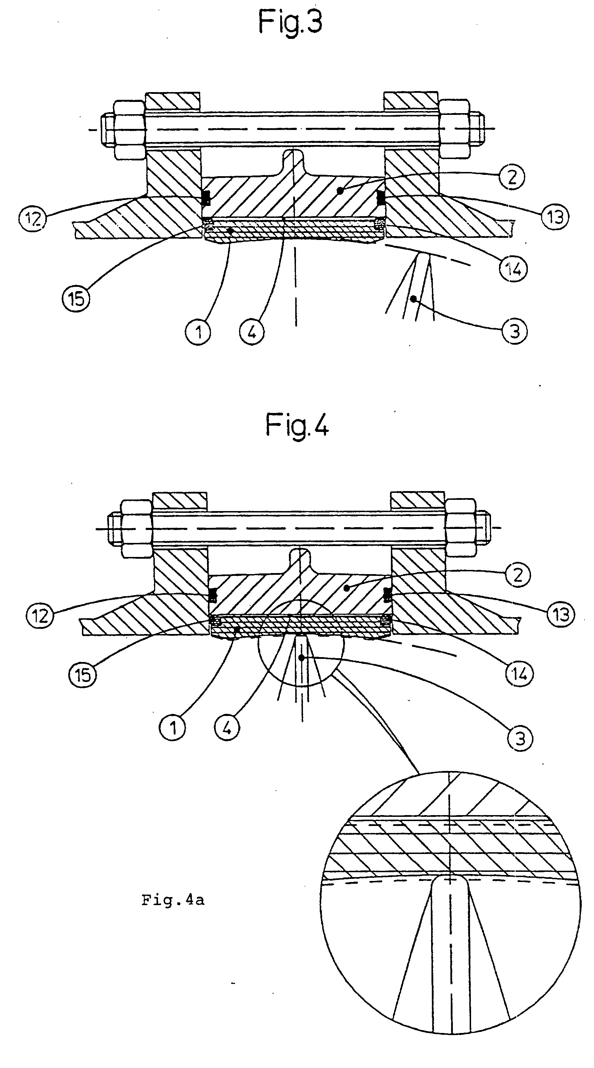

Le robinet est composé :
- d'un corps 2 muni de deux ailes radiales formant passages radiaux permettant de recevoir les arbres 7 et 8 ainsi que les supports de palier 9 et 10.
- d'un papillon 3 lenticulaire symétrique par rapport à son axe médian, sur lequel viennent se fixer les arbres 7 et 8. L'arbre 8 assurant la manoeuvre 1/4 de tour du papillon 3 pour ouvrir ou fermer le robinet.
- d'un siège 1 annulaire coopérant, d'une part, avec le papillon 3, et, d'autre part, avec le corps 2 pour assurer l'étanchéité du robinet lorsque le papillon 3 est fermé. Comme le montre la figure 4, la partie de la face intérieure du siège 1 qui est en contact est une surface sphérique qui coopère avec une surface sphérique du papillon 3.

La douille 9, 10 est maintenue dans le passage par un moyen 11.

En service, le robinet est assemblé serré entre deux brides des tuyauteries adjacentes. Deux joints 12, 13 assurent l'étanchéité entre les brides et le corps 2 vis-à-vis de l'extérieur.

Du point de vue des performances et de la durée de vie pour l'étanchéité fonctionnelle amont-aval du robinet, l'étanchéité est réalisée par la coopération de deux pièces : le papillon 3 et le siège 1 en contact par respectivement les surfaces externe et interne de forme sphérique et définies dimensionnellement pour avoir une interférence entre elles. Cette interférence induit une pression de contact, régulièrement répartie, entre le siège 1 et le papillon 3, pression de contact réalisant le niveau d'étanchéité requis lorsque le papillon 3 est fermé. L'étanchéité amont-aval entre le corps 2 et le siège 1 est réalisée grâce à deux joints toriques 14 et 15 intercalaires entre le corps 2 et le siège 1.

Il faut par ailleurs noter qu'il existe des jeux significatifs :
- radialement entre le diamètre extérieur du siège 1 et le diamètre intérieur du corps 2 (jeu 4 à la figure 3).
- axialement entre les faces latérales du siège 1 et les faces en vis-à-vis du corps 2 et d'une pièce 17.

Ces jeux permettent au siège 1 de s'auto-positionner librement par rapport au papillon 3 et d'adapter sa géométrie par rapport au papillon 3, indépendamment des écarts de position dûs aux tolérances de fabrication du corps, des arbres, des paliers, ...

Ils permettent également la libre dilatation thermique des pièces et évitent le coincement éventuel du papillon 3.

De plus, les joints toriques 14 et 15, tout en assurant l'étanchéité statique à l'arrière du siège 1, jouent un rôle de sommier élastique renforçant la pression de contact siège-papillon et compensent ainsi la chute de pression de contact pouvant se produire lors d'une dilatation du siège 1 lors d'une élévation de température.

Afin d'assurer une durée de vie et un nombre de cycles très important, le siège 1 est réalisé dans des matériaux présentant des tenues à l'usure les plus élevées : par exemple polyéthylène à très haut poids moléculaire (UHMWPE), polyacétal (POMC). D'autres matériaux sont possibles, soit polymères chargés avec des produits lubrifiants, soit métalliques dans la mesure où les coefficients de frottement et les taux d'usure sont acceptables pour le service requis.

L'importante surface en contact entre le siège 1 et le papillon 3 permet de réduire la pression spécifique au minimum et de minimiser ainsi le risque d'usure et les efforts de manoeuvre de l'obturateur.

Le choix du matériau, la dimension du siège 1 et la faible pression de contact ont été définis pour avoir un niveau d'étanchéité adapté aux besoins du process, indépendamment du nombre de cycles et du vieillissement du robinet du fait qu'il n'y a pas d'usure à ce niveau-là : de fait, la partie fonctionnelle du robinet n'a pas à être changée et assure sa fonction pendant toute la durée de vie du robinet.

Du point de vue de la maintenabilité in situ sans dépose du robinet de la tuyauterie : seules les pièces frottantes sollicitées sont à changer. Il s'agit ici essentiellement des paliers d'arbre et des joints d'étanchéité des passages d'arbre.

Pour réaliser les opérations de remplacement des pièces sans dépose du robinet, il a été prévu de monter les pièces d'usure (coussinets 16 et les joints 18, 19, 20, 21 et 23) sur les douilles amovibles 9 et 10.

Les douilles 9 et 10 peuvent être retirées du corps 2 et remplacées par des douilles neuves très simplement et très rapidement. Pendant cette opération, l'ensemble arbres 7, 8, papillon 3 reste en place et positionné sensiblement dans l'axe par le siège 1, puisque le bout de l'arbre 7, 8 reste dans le siège 1 qui est logé dans un alésage du corps 2.

Les coussinets sont choisis dans des matériaux autolubrifiants permettant de garder intacte la surface des arbres en contact.

Des filetages sont prévus sur les douilles 9 et 10 à leur extrémité accessible à l'extérieur du corps 2, afin de pouvoir utiliser des outillages-extracteur facilitant leur démontage et remontage rapides.

## Revendications

1. Un robinet comprenant un corps (2) à passage cylindrique, un papillon (3) symétrique par rapport à un plan médian et monté pivotant dans le corps (2) de manière à ouvrir ou fermer le passage, les arbres (7,8) de pivotement du papillon dans le corps (2) s'étendant dans le plan médian du papillon (3) et un siège (1) annulaire d'étanchéité en un matériau dur et rigide entre le corps (2) et le papillon (3) percé de deux trous de passage des arbres, la partie de la face intérieure du siège (1) qui est en contact avec le papillon (3) en position fermée étant une surface sphérique, la partie de la face extérieure du papillon (3) qui est en contact avec le siège (1) étant une surface sphérique, et un jeu étant prévu entre la face extérieure du siège (1) et le corps (2), **caractérisé en ce qu'**il est prévu un jeu entre la face latérale du siège (1) et une face en vis-à-vis du corps (2).

2. Le robinet suivant la revendication 1, qui comprend un joint torique entre le corps (2) et le siège (1).

## Claims

1. A valve comprising a body (2) with cylindrical passage, a butterfly disk (3) symmetrical with respect to a median plan and mounted pivotingly in the body (2) in such a way as to open or close the passage, the spindles (7, 8) for pivoting the butterfly disk (3) in the body (2) extending itself in the median plane of the butterfly disk and an annular sealing seat (1) made of a hard, rigid material between the body (2) and the butterfly disk (3) which seat is perforated by two holes for the passage of the spindles, wherein
- the part of the inner face of the seat (1) which is in contact with the butterfly disk (3) in the closed position is a spherical surface,
- the part of the outer face of the butterfly disk (3) which is in contact with the seat (1) is a spherical surface,
- a clearance being provided between the outer face of the seat (1) and the body (2),
**characterized in that**
- a clearance is provided between the side face of the seat (1) and an opposition face of the body (2).

2. The valve according to claim 1, which comprises a toroidal gasket between the body and the seat.

## Patentansprüche

1. Ventil enthaltend
- einen Körper (2) mit einem zylindrischen Durchlass,
- eine bezüglich einer Mittelebene symmetrische Drosselklappe (3), die im Köper (2) zum Öffnen und Schließen des Durchlasses schwenkbar angeordnet ist, wobei die Schwenkachsen (7,8) der Drosselklappe (3) sich in der Mittelebene erstrecken und
- einen ringförmigen Dichtsitz (1) aus einem harten und steifen Material zwischen dem Körper (2) und der Drosselklappe (3), der mit zwei Durchgangsbohrungen der Achsen durchsetzt ist,
- wobei der in Schließstellung mit der Drosselklappe (3) in Kontakt stehende Teil der Innenfläche des Sitzes (1) eine sphärische Fläche ist, und
- wobei der mit dem Sitz (1) in Kontakt Teil der Außenseite der Drosselklappe (3) eine sphärische Fläche ist, und
- ein Spiel zwischen der Außenseite des Sitzes (1) und dem Körper (2) vorgesehen ist, **dadurch gekennzeichnet, dass** ein Spiel zwischen der Seitenfläche des Sitzes (1) und einer gegenüberliegenden Fläche des Körpers (2) vorgesehen ist.

2. Ventil nach Anspruch 1, das einen Dichtring zwischen dem Körper (2) und dem Sitz (1) enthält.
